# EUROPÄISCHE PATENTANMELDUNG

(11) **EP 3 975 299 A1**
(43) Veröffentlichungstag der Anmeldung: **30.03.2022**
(21) Anmeldenummer: 20198923.3
(22) Anmeldetag: 29.09.2020
(51) Int. Cl.: H01M 4/86, C25B 11/00, H01M 4/88, H01M 4/90, H01M 8/1018

(54) **HERSTELLUNGSMETHODE VON KATALYSATORBESCHICHTETEN MEMBRANEN**

(71) Anmelder: Technische Universität Berlin, 10623 Berlin (DE)
(72) Erfinder: Dr. Bensmeier, Denis, 10709 Berlin (DE); Dr.-Ing. Krähnert, Ralph, 13469 Berlin (DE); Dr. Bernicke, Michael, 10245 Berlin (DE); Paul, Benjamin, 12439 Berlin (DE)
(74) Vertreter: Hertin und Partner Rechts- und Patentanwälte PartG mbB

(57) **Zusammenfassung**

Die Erfindung betrifft ein Verfahren zur Herstellung einer katalysatorbeschichteten Polymermembran für einen Elektrolyseur und/oder eine Brennstoffzelle. Dabei umfasst das Verfahren in einem ersten Schritt bevorzugt die Bereitstellung eines Glas-Keramik-Substrats. Anschließend wird bevorzugt eine mesoporöse Katalysatorschicht auf das Glas-Keramik-Substrat synthetisiert. In einem nachfolgenden Schritt wird bevorzugt eine Polymermembran auf das mit der Katalysatorschicht beschichtete Glas-Keramik-Substrat unter einer ersten Temperatur T₁ gepresst. Dadurch wird ein Sandwichgebilde erhalten. In einem abschließenden Verfahrensschritt wird das Sandwichgebilde separiert, wobei die Katalysatorschicht vom Glas-Keramik-Substrat getrennt wird und an der Polymermembran haftet.

Zudem betrifft die Erfindung eine Polymermembran, welche durch das Verfahren eingangs genannter Art hergestellt wurde, sowie einen Elektrolyseur oder eine Brennstoffzelle mit einer solchen Polymermembran.

## Beschreibung

### Technisches Gebiet

Die Erfindung betrifft ein Verfahren zur Herstellung einer katalysatorbeschichteten Polymermembran für einen Elektrolyseur und/oder eine Brennstoffzelle. Dabei umfasst das Verfahren in einem ersten Schritt bevorzugt die Bereitstellung eines Glas-Keramik-Substrats. Anschließend wird bevorzugt eine mesoporöse Katalysatorschicht auf das Glas-Keramik-Substrat synthetisiert. In einem nachfolgenden Schritt wird bevorzugt eine Polymermembran auf das mit der Katalysatorschicht beschichtete Glas-Keramik-Substrat unter einer ersten Temperatur T₁ gepresst. Dadurch wird ein Sandwichgebilde erhalten. In einem abschließenden Verfahrensschritt wird das Sandwichgebilde separiert, wobei die Katalysatorschicht vom Glas-Keramik-Substrat getrennt wird und an der Polymermembran haftet.

Zudem betrifft die Erfindung eine Polymermembran, welche durch das Verfahren eingangs genannter Art hergestellt wurde, sowie einen Elektrolyseur oder eine Brennstoffzelle mit einer solchen Polymermembran.

### Hintergrund und Stand der Technik

Brennstoffzellen und Elektrolyseurzellen bestehen aus Elektroden, die durch einen Elektrolyten (lonenleiter) voneinander getrennt sind. Der Elektrolyt kann aus einer semipermeablen Membran bestehen, die nur für eine lonensorte, z. B. Protonen, durchlässig ist. In Elektrolyseurzellen und Brennstoffzellen mit protonenleitender Membran (PEM) werden neben katalysatorbeschichteten Gas Diffusionsschichten (catalyst coated gas diffusion layer - CCG) vor allem katalysatorbeschichtete Membranen (catalyst-coated membranes - CCM), auch als Membran-Elektroden-Einheiten (membrane-electrode-assemblies - MEAs) benannt, eingesetzt.

Zur Herstellung einer katalysatorbeschichteten Membran werden elektrokatalytisch aktive Katalysatorschichten auf protonenleitende Membranen (Nafion, Aquivion) aufgetragen. Diese werden üblicherweise mit Gasdiffusionsschichten (gas diffusion layers) kontaktiert und in einer Zelle montiert.

Aus dem Stand der Technik (US 7972743 B2 und JP 2003211063 A) sind weiterhin Verfahren bekannt, die das Aufbringen von Katalysatorschichten auf eine Membran über direkte Beschichtungsverfahren (Blading, Siebdruck oder Sprühverfahren) ermöglichen. Für diese Verfahren werden Katalysatoren mit einem lonomer, welches als lonenleiter und Binder wirkt, zu einem Ink dispergiert und auf die Membran aufgetragen.

Die Herstellung einer katalysatorbeschichteten Membran anhand einer aus dem Stand der Technik bekannten Beschichtung, insbesondere einer homogenen Sprühbeschichtung, ist nachteilig zeitaufwendig und ist bei einer manuellen Präparation nicht reproduzierbar. Eine Herstellung mit einem Roboter, bevorzugt einem Sprühroboter, führt zwar zu gleichmäßigeren Ergebnissen, ist aber kostenintensiv.

Überdies sind indirekte Methoden zur Aufbringung einer Katalysatorschicht auf eine Membran bekannt.

Die Druckschrift US20020136940 A1 offenbart beispielsweise ein sogenanntes Decal-Verfahren. Darin wird ein Katalysator auf ein Transfermedium (Teflon) gebracht und von diesem Transfermedium über einen Hotpressing-Schritt auf die ionenleitende Membran überführt.

Die Dokumente US5879828 A und US6040077 A offenbaren ebenfalls eine indirekte Methode, wobei ein Polymer(Polyimid)-Substrat als Transfermedium eingesetzt wird. Das Katalysatormaterial wird in den Offenbarungen auf das Transfermedium aufgetragen und anschließend auf eine Nafionmembran gepresst. Als Produkt wird eine Katalysatorschicht umfassende Membran erhalten.

Die bekannten Verfahren (sowohl direkte als auch indirekte Verfahren) zur Herstellung einer katalysatorbeschichten Membran ermöglichen jedoch nachteilig keine nanostrukturierten mesoporösen Katalysatorschichten auf Polymermembranen. Insbesondere derartige Schichten sind jedoch mit wesentlichen Vorteilen verbunden. Es hat sich gezeigt, dass im Halbzellenmaßstab mesoporös templatierte Katalysatorschichten eine deutlich höhere Massenaktivität der elektrochemisch aktiven Spezies aufweisen, als vergleichbare herkömmliche Katalysatorschichten, die bspw. über eine Ink-basierte Methode hergestellt wurden. Der Einsatz von nanostrukturierten mesoporösen Katalysatorschichten auf Polymermembranen in realer Umgebung ist aus dem Stand der Technik nicht bekannt.

### Aufgabe der Erfindung

Die Aufgabe der Erfindung war es daher die Nachteile aus dem Stand der Technik zu beseitigen und eine Polymermembran mit einer nanostrukturierten mesoporösen Katalysatorschicht und insbesondere ein Verfahren zur Herstellung einer solchen Polymermembran bereitzustellen.

### Zusammenfassung der Erfindung

Die erfindungsgemäße Aufgabe wird gelöst durch die Merkmale der unabhängigen Ansprüche. Vorteilhafte Ausgestaltungen der Erfindung sind in den abhängigen Ansprüchen beschrieben.

In einer bevorzugten Ausführungsform betrifft die Erfindung ein Verfahren zur Herstellung einer katalysatorbeschichteten Polymermembran für einen Elektrolyseur und/oder eine Brennstoffzelle
umfassend die nachfolgenden Schritte:
a) Bereitstellung eines Glas-Keramik-Substrats
b) Synthese einer mesoporösen Katalysatorschicht auf das Glas-Keramik-Substrat
c) Pressen einer Polymermembran auf das mit der Katalysatorschicht beschichtete Glas-Keramik-Substrat unter einer ersten Temperatur T₁, wodurch ein Sandwichgebilde erzeugt wird
d) Separieren des Sandwichgebildes, wobei die Katalysatorschicht vom Glas-Keramik-Substrat getrennt wird und an der Polymermembran haftet.

Um höchst leistungsfähigen Katalysatorschichten (nanostrukturierte mesoporöse Katalysatorschichten) in einen PEM-Elektrolyseur zu überführen, musste ein Verfahren entwickelt werden, welches das Aufbringen einer mesoporösen Schicht auf die Polymermembran ermöglicht. Die Erfinder waren mit verschiedenartigen Problemstellungen bei der Entwicklung des bevorzugten Verfahrens konfrontiert und mussten diese durch ein hohes Maß an erfinderischen Überlegungen lösen.

So kann die Polymermembran nicht direkt mit dem mesoporösen Katalysator beschichtet werden, da die Synthese einer mesoporös templatierten Katalysatorschicht eine thermische Behandlung erfordert, die die Polymermembran zerstören würde. Es musste daher eine Methode gefunden werden, eine intakte Katalysatorschicht zu synthetisieren, und diese anschließend ohne Zerstörung auf die Polymermembran zu überführen. Da die Katalysatorschicht eine hohe Porosität aufweist, ist sie darüber hinaus sehr fragil, daher muss sie auf einem rigiden Substrat erzeugt und thermisch behandelt werden.

Die Kombination der vorliegenden Verfahrensschritte führt zu einem überraschenden Synergieeffekt, der zu den vorteilhaften Eigenschaften und dem damit einhergehenden Gesamterfolg der Erfindung führt, wobei die einzelnen Merkmale in Wechselwirkung zueinander stehen. Ein wichtiger Vorteil des erfindungsgemäßen Verfahrens ist zudem die überaus schnelle, reproduzierbare und wirtschaftliche Syntheseprozedur.

Darüber hinaus musste das zu verwendete Substrat sicherstellen, dass die erzeugte Katalysatorschicht zerstörungsfrei auf eine Membran überführt werden kann. Es hat sich überraschend herausgestellt, dass ein Glas-Keramik-Substrat sich besonders gut dafür eignet. Durch die Verwendung eines Glas-Keramik-Substrates zur Synthese einer leicht ablösbaren, trotzdem stabilen, mesoporösen Schicht, kann die Schicht vorteilhaft ohne den Einsatz eines Binders auf eine Polymermembran gepresst werden. Die Vermeidung des Binders führt dabei vorteilhaft bei einer Schicht, die als Katalysator dient, zu einer erhöhten Aktivität aufgrund besser Zugänglichkeit aktiver Zentren.

Im Sinne der Erfindung ist ein Glas-Keramik-Substrat bevorzugt ein Werkstoff, welcher glasartige und/oder keramische Eigenschaften aufweist. Folgende Eigenschaften sind bevorzugt unter glasartig zu verstehen;
- mit vielen anderen Materialien ohne Wechselwirkungen kombinierbar
- lässt sich bei sehr hohen Temperaturen formen, bleibt im kalten Zustand jedoch formstabil
- verträgt relativ hohe Temperaturen
- gasdicht

Charakteristische keramische Eigenschaften sind hingegen bevorzugt
- relativ niedrige Zugbelastbarkeit
- sprödes Verhalten
- hohe Temperaturresistenz
- niedrige Temperaturwechselbeständigkeit
- schlechte thermische Leitfähigkeit
- Unlöslichkeit in Wasser,
- Schwerlöslichkeit in Säuren, Basen und Salzlösungen.

Das Glas-Keramik-Substrat verfügt demnach vorteilhafterweise über eine ausreichende strukturelle Integrität. Darüber hinaus kann es einer thermischen Behandlung in sauerstoffhaltiger Atmosphäre standhalten. Ferner wird einerseits vorteilhaft eine mechanische Haftung der synthetisierten Katalysatorschicht gewährleistet und andererseits trotzdem auch eine Wiederablösung der Schicht ermöglicht.

Es ist bevorzugt, dass das zu verwendete Substrat auch ausschließlich Glas- oder Keramik-Eigenschaften aufweist.

Andere Substrate (Titan, Silicium, Quarzglas) sind nicht geeignet, da sie über eine natürliche (Titan), bzw. kontrolliert erzeugte (Silicium) dünne Oxidschicht auf der Oberfläche verfügen. Beschichtet man nun diese Substrate, können auf der Substratoberfläche vorhandene Sauerstofffunktionen während der thermischen Behandlung eine kovalente und/oder ionische Bindungen mit der Katalysatorschicht eingehen, wodurch starke mechanische Haftung resultiert. Diese starke Haftung verhindert eine Übertragung der Katalysatorschicht nach dem Pressvorgang.

Auch Teflon ist nicht als Substrat geeignet. Unter anderem tritt bei Teflon nämlich im Zusammenhang mit den für die Synthese der nanostrukturierten mesoporösen Katalysatorschicht notwendigen Temperaturen (T₃ - thermische Behandlung) Zersetzung unter Bildung gesundheitsschädlicher Dämpfe ein. Die Synthese einer mesoporösen Katalysatorschicht auf das Glas-Keramik-Substrat, welche bevorzugt vor der Auftragung der mesoporöse Katalysatorschicht auf die Polymermembran erfolgt, führt vorteilhaft zu der eingangs benannten indirekten (Transfer-) Methode, sodass eine für die Synthese notwendige thermische Behandlung ermöglicht wird. Wie schon erläutert, würde die Polymermembran unter Einfluss von hohen Temperaturen zerstört werden, sodass ein direktes Synthetisieren ausscheidet. Die indirekte Methode hat sich als besonders bevorzugte Alternative herausgestellt. Nach der erörterten Synthese der Katalysatorschicht auf das Glas-Keramik-Substrat wird eine Polymermembran auf das mit der Katalysatorschicht beschichtete Glas-Keramik-Substrat unter einer ersten Temperatur T₁ gepresst. Die mesoporöse Katalysatorschicht wird bevorzugt durch das Pressen (bei erhöhter Temperatur) auf eine Polymermembran überführt. Im Bereich des Glasübergangpunktes der Membran werden die darin enthaltenen Polymerketten mobil und können gegeneinander verschoben werden. Die Katalysatorschicht dringt, abhängig von Temperatur, Anpressdruck und Zeit, eine gewisse Weglänge in die Membran ein. Durch Abkühlen der Membran erstarren die Polymerketten und bilden eine kovalente Bindung mit der Katalysatorschicht. Die Adhäsionskräfte zwischen Katalysator und Membran sind dabei größer als zwischen Katalysatorschicht und Glas-Keramik-Substrat. In einem nachgeschalteten Trennungsschritt wird die Membran abgezogen wodurch der Katalysatorschicht vom Glas-Keramik-Substrat getrennt wird.

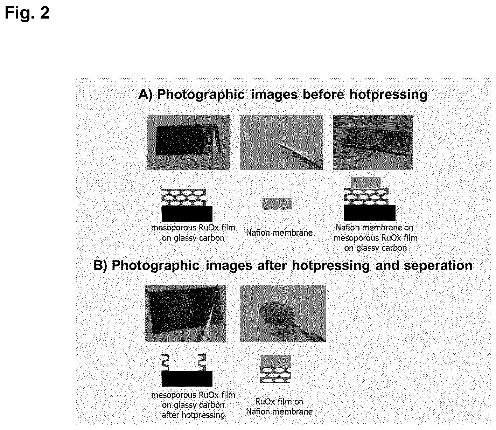

Ein Sandwichgebilde ist im Sinne der Erfindung bevorzugt ein stoffschlüssiger Verbund, wobei dieser bevorzugt aus der Polymembran, Katalysatorschicht und Glas-Keramik-Substrat ausgestaltet ist. Die Polymembran und die Katalysatorschicht sowie das Glas-Keramik-Substrat werden anhand des Pressens unter erhöhtem Druck übereinandergestapelt. Sie sind jedoch ohne große Kraftaufwendungen voneinander lösbar, sodass ein Anwender das Sandwichgebilde beispielsweise mit einer Pinzette oder kleinen Zange voneinander lösen kann (s. Fig. 2). Es hat sich gezeigt, dass durch den Verfahrensschritt des Pressens die mesoporöse Struktur der Katalysatorschicht nicht zerstört wird, sodass diese Struktur vorteilhaft auf die Polymermembran übertragen werden kann.

Unter einer Nanostrukturierung ist bevorzugt die Strukturierung eines Festkörpers auf atomarem Niveau (im Nanomaßstab) zu verstehen. Durch gezielte Modifikation (Implantation) werden atomare, chemische usw. meist oberflächennahe Festkörpereigenschaften verändert.

Eine nanostrukturierte mesoporöse Katalysatorschicht ist bevorzugt als eine geordnete Nanostruktur der mesoporöse Katalysatorschicht zu verstehen. Das bedeutet, dass einer Katalysatorschicht wiederholend (periodisch) in gleicher Weise in etwa gleiche Strukturelemente (z. B. Mesoporen mit einem Durchmesser von 2 bis 50 nm) umfasst sind (bspw. aneinandergereiht).

In einer weiteren bevorzugten Ausführungsform ist das Verfahren dadurch gekennzeichnet, dass das Glas-Keramik-Substrat ein Glaskohlenstoff ist.

Glaskohlenstoff ist ein synthetischer Werkstoff aus reinem Kohlenstoff, der glasartige keramische Eigenschaften mit denen des Graphits vereint und daher besonders bevorzugt für die Verwendung als Glas-Keramik-Substrat geeignet ist. Dass die Verwendung eines solchen Substrates zu einer erfolgreichen Herstellung einer mesoporösen templatierten Katalysatorschicht auf eine Polymermembran geführt hat, war dennoch nicht vorherzusehen. Für den Fachmann ist die Verwendung von Glaskohlenstoff als Substrat bei der Herstellung von Oxidschichten (Katalysatorschichten) ungewöhnlich, da eine thermische Behandlung bei Temperaturen höher als 300 °C und sauerstoffhaltige Atmosphäre erfordert wird. Weiterhin ist die Verwendung von Glaskohlenstoff als Transfermedium im Hotpress-Verfahren (Pressen bei erhöhter Temperatur) ungewöhnlich, da es unter Druck leicht bricht.

In einer weiteren bevorzugten Ausführungsform können als Glas-Keramik-Substrate bevorzugt Substrate mit graphitischen Kohlenstoffbeschichtungen eingesetzt werden. Der Kohlenstoff in der Beschichtung zeigt ein ähnliches Verhalten auf, wie der Glaskohlenstoff. Ferner eignen sich bevorzugt auch weitere Kohlenstoffmodifikationen für derartige Beschichtungen.

In einer weiteren bevorzugten Ausführungsform weist das Glas-Keramik-Substrat Materialien und/oder Beschichtungen auf, die sich bei der thermischen Behandlung zersetzen. Die Zersetzung (bzw. Veränderung der Beschichtung) ist dabei bevorzugt gering, sodass die Bindung zwischen templatiert mesoporösem Katalysatorschicht und Substrat geschwächt wird, aber nicht verloren geht. In dem Fall, dass die Ablösung durch thermische Zersetzung der oberen Lage des Substrats nicht gelingt, ist bevorzugt auch eine chemische Behandlung denkbar. Bevorzugt könnte zum Beispiel eine Ätzung oder Ablösung der obersten Substratschicht umgesetzt werden.

In einer weiteren bevorzugten Ausführungsform ist das Verfahren dadurch gekennzeichnet, dass dem Verfahrensschritt c) und dem Verfahrensschritt d) der nachfolgende Verfahrensschritt zwischensteht:
c1)Abkühlen des Sandwichgebildes, auf eine zweite Temperatur T₂

Das Abkühlen ist insbesondere von hoher Bedeutung, wenn das Sandwichgebilde auf eine Temperatur gebracht wurde, welches oberhalb des Glasübergangspunktes der Polymermembran befindet, denn insbesondere unterhalb der Glasübergangstemperatur bilden sich hohe Adhäsionskräfte zwischen der Katalysatorschicht der Membran. Dies führt zu einer möglichst vollständigen (ohne Schäden) Übertragung der Katalysatorschicht ausgehend vom Glas-Keramik-Substrat auf die Polymermembran. In einer weiteren bevorzugten Ausführungsform ist das Verfahren dadurch gekennzeichnet, dass der Verfahrensschritt b) die nachfolgenden Schritte umfasst:
(i) Herstellung einer Suspension umfassend ein Templat, einen Metall-Präkursor und ein Lösungsmittel;
(ii) Auftragen der Suspension auf das Glas-Keramik-Substrat, sodass sich ein Suspensionsfilm auf dem Glas-Keramik-Substrat bildet;
(iii) Trocknen des Suspensionsfilms auf dem Glas-Keramik-Substrat bei einer Temperatur T₄, sodass das Lösungsmittel innerhalb des Suspensionsfilms verdampft und eine Schicht einer Katalysatorvorstufe mit integrierten Templatstrukturen erhalten wird;
(iv) thermische Behandlung des Katalysatorvorstufen umfassenden Glas-Keramik-Substrats bei einer dritten Temperatur T₃ und einer Kalzinierzeit t₃, sodass eine mesoporöse Katalysatorschicht entsteht.

In diesem Zusammenhang wird bevorzugt ein Metallsalz als Katalysatorvorstufe zusammen mit einem Templat in einem geeigneten Lösungsmittel dispergiert und diese Mischung auf das Glas-Keramik-Substrat überführt. Das nachfolgende Verdampfen des Lösungsmittels führt zu einer vorteilhaften periodischen Anordnung des Templats umgeben von einer Katalysatorvorstufe. Eine anschließende thermische Behandlung bei bevorzugten Temperaturen zwischen 300 °C - 600 °C verbrennt das Templat und überführt die Vorstufe in den eigentlichen Katalysator, bevorzugt ein Metalloxid. Durch die Entfernung des Templats entstehen Poren, die miteinander verknüpft sind und besonders vorteilhaft eine hohe Oberfläche für katalytische Prozesse zur Verfügung stellen.

Die oxidative Zersetzung der obersten Lage des Glas-Keramik-Substrats führt zu einer beginnenden Ablösung der anhaftenden Katalysatorschicht. Die Schicht hält jedoch weiterhin auf dem Substrat. Dieser Effekt ist überraschend, denn der Fachmann erwartet eine komplette Ablösung beziehungsweise ein Zerfall der Oxidschicht auf dem Glas-Keramik-Substrats.

Die Synthese auf das Glas-Keramik Substrat gelingt, da schon eine kurze Kalzinierzeit (bevorzugt 10 Minuten) bei hoher Temperatur (bevorzugt 300 °C - 600 °C) für die Erzeugung aktiver Katalysatorschicht ausreicht. Lange Kalzinierzeiten können zur Degradation der Katalysatorschicht aufgrund der ausführlicheren Zersetzung des tragenden Glas-Keramik-Substrats führen.

Der bevorzugte Syntheseansatz basiert auf Templaten die als Platzhalter für ein gewünschtes Porengefüge dienen. Während der Synthese wird das Templat vom umgebenden Material (Katalysatorvorstufe) eingeschlossen und hinterlassen nach ihrer Entfernung ein definiert poröses Material. Abhängig von der Templatgröße entstehen Porenstrukturen mit Porengrößen von einigen Mikrometern bis zu wenigen Nanometern. Materialien mit einer geordneten Porenstruktur und einer monomodalen Porengrößenverteilung können demnach bevorzugt über sogenannte Templatierungsverfahren synthetisiert werden. Bei diesem Syntheseansatz dienen Template als Platzhalter für die gewünschte Porenform.

In weiteren bevorzugten Ausführungsformen umfasst das Templat bevorzugt Tenside, Block-Copolymere und/oder dendritische Kern-Schalenpolymere. Das Templat führt zu vorteilhaften mesoporösen Strukturierungen innerhalb der Katalysatorschicht, wobei das Templat Mizellen bilden oder aber auch andere Strukturierungen aufweisen kann. Das Templat kann in weiteren Alternativen auch ein nicht Mizellen bildendes Kern-Schale-Makromolekül, gewissermaßen eine unimolekulare Mizelle, umfassen. Weiterhin können Block-Copolymere auch lamellare Strukturen annehmen.

In einer bevorzugten Ausführungsform sind Template als Softtemplate ausgestaltet. Softtemplate sind verformbare strukturdirigierende Einheiten. Dies können Mizellen oder lamellare Strukturen aus amphiphilen Polymeren (oftmals Block-Copolymere) sein. Typischerweise entstehen die Mizellen oder Lamellen oberhalb einer kritischen Konzentration eines in einem Lösungsmittel dispergierten Polymers. Zu den Softtemplaten gehören auch dendritische oder hyperverzweigte Kern-Schalenpolymere, wobei Kern und Schale der Polymere unterschiedliche Hydrophilizitäten zeigen, somit auch amphiphil sind.

In einer weiteren bevorzugten Ausführungsform sind Template als Hardtemplate ausgestaltet. Hardtemplate sind starre sturkturdirigierende Einheiten. Zu nanostrukturierte Hardtemplaten zählen Metalle, Oxide, oftmals Siliziumoxide (z.B. MCM-Gruppe, SBA-Gruppe, FDU-Gruppe, KIT-Gruppe, MSU-Gruppe, TUD-Gruppe, HMM-Gruppe, FSM-Gruppe) sowie Kohlenstoffe (z.B. CMK-Gruppe). Es kann sich bei diesen Hardtemplaten um einzelne Nanopartikel oder um nanostrukturierte größere Gebilde handeln.

In einer weiteren bevorzugten Ausführungsform ist das Verfahren dadurch gekennzeichnet, dass die Temperatur T₁ in einem Bereich liegt zwischen 80°C und 800°C, bevorzugt in einem Bereich zwischen 100°C und 300°C und insbesondere bei 120°C.

Das Pressen bei erhöhten Temperaturen, bevorzugt in den Bereichen von 80°C und 800°C, ermöglicht vorteilhaft ein Pressen mit geringen Kräften, wobei die Transferierung (vom Glas-Keramik-Substrat zur Polymermembran) der mesoporösen Katalysatorschicht - trotz der geringen Kräfte- möglich ist. Erhöhte Temperaturen führen zu einer verbesserten Reaktion der verschiedenen Werkstoffe im Sandwichgebilde und ermöglichen ein vollständiges Übertragen der Katalysatorschicht vom Glas-Keramik-Substrat auf die Polymermembran. In dem Bereich von 100°C und 300°C werden die Kosten der aufzubringenden Energie relativ geringgehalten, wobei die Pressdauer auf ein Minimum reduziert werden kann. Das Pressen bei etwa 120 °C führt zu besonders guten reproduzierbaren Ergebnissen, sodass der Prozess automatisiert abfolgen kann. Darüber hinaus wird ein besonders einfach zu separierendes Sandwichgebilde erhalten Insbesondere ist die Temperatur von etwa 120 °C für Verwendung einer Nafionmembran als Polymermembran besonders vorteilhaft, da diese eine Glasübergangstemperatur bei 110° C aufweist.

Für die Aufwendung der Presskraft wird bevorzugt eine manuelle hydraulische Hitzepresse verwendet, wobei das Sandwichgebilde über zwei Heizplatten, welche oberhalb und unterhalb des Gebildes angeordnet sind, erwärmt wird. Es sind jedoch auch andere Varianten möglich, um die Presskraft und die bevorzugte Temperatur T₁ zu erhalten. So kann beispielsweise der Transfer mit einer Hand eines Anwenders erfolgen, in dem das Sandwichgebilde beispielsweise mit einem Heißluftstrom, einer Heizplatte oder einem Ofen ausreichend erwärmt wird und anschließend mit der Hand festgedruckt wird.

Vorteilhaft ist durch das erfindungsgemäße Verfahren eine Beschichtung bzw. eine Synthese einer mesoporösen Katalysatorschicht auf ein komplex strukturiertes Glas-Keramik-Substrat möglich. Dieses wiederum kann im Zuge der vorliegenden Erfindung während des Transfers der Katalysatorschicht auf die Polymermembran (im Sandwichgebilde) als Stempel für die Bildung von Mustern (oder ähnlichen) auf der Polymermembran dienen. Weiterhin bevorzugt kann das Glas-Keramik-Substrat auch sehr klein ausgestaltet sein, sodass im Zusammenspiel mit anderen Glas-Keramik-Substraten ein Muster auf der Membran entstehen kann.

Alle in diesem Dokument offenbarten Parameterbereiche, wie bspw. Temperaturen, Kräfte, Drücke, Abstände etc., umfassen selbstverständlich alle Werte innerhalb der angegebenen Bereiche sowie deren maximalen und minimalen Grenzwerte. Es ist für einen Fachmann ersichtlich, dass die Werte auch gewissen Schwankungen unterliegen. Im vorliegenden Fall handelt sich demnach um einen Temperaturberiech von etwa 80°C und 800°C, und bevorzugt etwa 100°C und 300°C und insbesondere etwa 120°C. Dies lässt sich auch auf alle weiteren Parameterbereiche des Dokumentes analog übertragen.

Begriffe wie "im Wesentlichen", "ungefähr", "etwa", "ca." etc. beschreiben bevorzugt einen Toleranzbereich von weniger als ± 40%, bevorzugt weniger als ± 20%, besonders bevorzugt weniger als ± 10 %, noch stärker bevorzugt weniger als ± 5% und insbesondere weniger als ± 1% und umfassen stets den exakten Wert. "Ähnlich" beschreibt bevorzugt Größen die "ungefähr gleich" sind. "Teilweise" beschreibt bevorzugt zu mindestens 5 %, besonders bevorzugt zu mindestens 10 %, und insbesondere zu mindestens 20 %, in einigen Fällen zu mindestens 40 %.

In einer weiteren bevorzugten Ausführungsform ist das Verfahren dadurch gekennzeichnet, dass die Polymermembran auf das mit der Katalysatorschicht beschichtete Glas-Keramik-Substrat mit einem Anpressdruck p₁ in einem Bereich von 1000 N/cm² bis 3000 N/cm² und einer Zeit t₁ in einem Bereich von 5 min bis 60 min gepresst wird.

In den beschriebenen Druckbereichen von 1000 N/cm² bis 3000 N/cm² kann bevorzugt eine kurze Prozesszeit erreicht werde. Der Druck führt darüber hinaus dazu, dass Glas-Keramik-Substrat nicht zerstört wird, wobei vorteilhaft der Druck das Interagieren der Verbundpartner ermöglicht, sodass die mesoporöse Katalysatorschicht eine kovalente Bindung mit den Polymerketten der Polymermembran eingehen kann.

In einer weiteren bevorzugten Ausführungsform ist das Verfahren dadurch gekennzeichnet, dass die Polymermembran auf das mit der Katalysatorschicht beschichtete Glas-Keramik-Substrat mit einem Anpressdruck p₁ in einem Bereich von 300 N/cm² bis 10000 N/cm² und einer Zeit t₁ in einem Bereich von 5 s bis 300 min gepresst wird. Der benannte Druckbereich in Kombination mit dem Zeitbereich führt vorteilhaft im Ergebnis zu einer besonders gleichmäßig ausgeprägten mesoporösen Katalysatorschicht.

Für die Dauer der Pressung (bis zur Separation der Polymermembran) liegt der Verbund aus Glas-Keramik-Substrat als ein Sandwichgebilde vor.

In einer weiteren bevorzugten Ausführungsform ist das Verfahren dadurch gekennzeichnet, dass die Polymermembran auf das mit der Katalysatorschicht beschichtete Glas-Keramik-Substrat mit einem Anpressdruck p₁ in einem Bereich von etwa 2000 N/cm² und einer Zeit t₁ in einem Bereich von etwa 15 min gepresst wird. Bevorzugt wurde die Pressung unter einer Temperatur von etwa 120°C durchgeführt. Es hat sich gezeigt, dass unter Durchführung dieser Parameter besonders gute mesoporöse Katalysatorschichten auf Polymembranen aufbringen lassen. Dabei ergeben sich vorteilhafterweise synergistische Effekte von Anpressdruck, Anpresszeit und Anpresstemperatur, welche zu einer besonders langen Lebensdauer der Polymermembran führen.

In einer weiteren bevorzugten Ausführungsform wird die Polymermembran auf das mit der Katalysatorschicht beschichtete Glas-Keramik-Substrat mit einem Anpressdruck p₁ von insbesondere etwa. 200 kg/m² gepresst.

In einer weiteren bevorzugten Ausführungsform wird die Polymermembran auf das mit der Katalysatorschicht beschichtete Glas-Keramik-Substrat mit einer Zeit von etwa t₁= 15 min durchgeführt.

In einer weiteren bevorzugten Ausführungsform ist das Verfahren dadurch gekennzeichnet, dass die Temperatur T₂ einer Temperatur unterhalb des Glaspunktes der Polymermembran entspricht und die Temperatur T₄ in einem Bereich zwischen 18°C -80°C liegt.

Sobald die Temperatur T₂ auf eine Temperatur unterhalb des Glaspunktes der Polymermembran abgekühlt ist, kann die Sandwichgebilde separiert werden, denn durch Abkühlen der Membran unterhalb des Glaspunktes erstarren die Polymerketten und bilden eine starke Haftung (aufgrund von kovalenter Bindung und/oder Van der Waals-Kräfte) mit der Katalysatorschicht aus. Da die Temperatur unterhalb des Glaspunktes schon ausreicht und nicht weiter heruntergekühlt werden muss, können vorteilhaft relativ kurze Prozesszeiten erreicht werden. Darüber hinaus müssen keine Kühlaggregate angewendet, um ein schnelles Abkühlen zu ermöglichen.

In einer bevorzugten Ausführungsform wird das Sandwichgebilde nach dem Heizpressen von den Heizplatten distanziert, sodass das Sandwichgebilde vorteilhaft schnell abkühlen kann. Bevorzugt liegt die Temperatur T₂ bei etwa 50°C.

Im Fall einer Nafionmembran ist die Temperatur T₂ bevorzugt unterhalb von 110°. Stärker bevorzugt liegt die Temperatur T₂ zwischen 18°C und 108°C. Es sind jedoch auch durchaus Varianten vorstellbar in denen die Temperatur T₂ bei sehr niedrigen Temperaturen <0°C liegt.

Das Trocknen der Schicht auf dem Glaskohlenstoffsubstrat kann im Temperaturbereich von der Raumtemperatur bis 80°C stattfinden. Dadurch wird vorteilhaft nur sehr wenig Energie aufgebracht. Zudem reicht für derartige Temperaturen die Abwärme der Erwärmungsanlagen als Trocknungsenergie um ein schnelles Trocknen des Suspensionsfilms zu erhalten. Dies führt darüber hinaus zu großen wirtschaftlichen Ersparnissen des Verfahrens.

In einer bevorzugten Ausführungsform findet die thermische Behandlung in Erwärmungsanlagen statt. Zur Entfernung des Templats kann beispielsweise ein Rohrofen im Luftstrom oder Muffelofen verwendet werden. Derartige Öfen weisen eine gleichmäßige Temperaturverteilung auf, sodass die Wiederholbarkeit des Verfahrens vorteilhaft gegeben ist. Ferner kann die Abwärme der Öfen vorteilhaft für weitere Verfahrensschritte (z.B. Trocknung) verwendet werden, um damit einhergehend Energie zu sparen.

In einer weiteren bevorzugten Ausführungsform kann die thermische Behandlung auch - anstelle einer Erwärmung durch einen Ofen - mit weiteren folgenden Verfahren erfolgen. Bevorzugt wird das Katalysatorvorstufen umfassenden Glas-Keramik-Substrat über Rapid Thermal Annealing (RTA) mit der Abwärme einer Halogenlampe thermisch behandelt. Weiterhin bevorzugt wird das Katalysatorvorstufen umfassenden Glas-Keramik-Substrat über ein Flash-Lamp Annealing erwärmt. Dies führt vorteilhaft zu einer schnellen Aufheizung und einer ausschließlichen Erhitzung der Oberfläche. Darüber hinaus ist das Verfahren Laser Annealing ebenso bevorzugt. Dieses Verfahren führt zu einer noch schnelleren Erwärmung des Katalysatorvorstufen umfassenden Glas-Keramik-Substrats, wobei eine sehr geringe Eindringtiefe erreicht wird und ausschließlich die Oberfläche erhitzt wird. Möglich wäre die Erhitzung eines geeigneten Substrates mit einem Induktionsofen. Auch dies führt zu einer sehr schnellen Erhitzung.

In einer weiteren bevorzugten Ausführungsform ist das Verfahren dadurch gekennzeichnet, dass die Temperatur T₃ in einem Bereich liegt zwischen 200°C und 700°C, bevorzugt zwischen 300°C und 600°C, und die Kalzinierzeit t₃ in einem Bereich liegt zwischen 1 Minute und 1440 Minuten, insbesondere bei 10 Minuten.

Um das Templat thermisch zu zersetzten und die anorganische Spezies in ein kristallines Metalloxid umzuwandeln, wird die Katalysatorvorstufe bevorzugt kalziniert.

Die Kalzinierung führt zu einem drastischen Volumenverlust der Schicht, verursacht durch die Verbrennung des Templats und der Umwandlung der amorphen Porenwand zu einem kristallinen Material. Da die Haftung der Schicht auf dem Substrat vergleichsweise stark ist, u.a. durch kovalente Bindungen zwischen der Substratoberfläche und der Metalloxid-Spezies, kommt es zu einer Kontraktion der Schicht ausschließlich senkrecht zum Substrat, ohne dass der Schicht reißt.

In einer weiteren bevorzugten Ausführungsform ist das Verfahren dadurch gekennzeichnet, dass das Templat ein oder mehrere amphiphile Block-Copolymere umfasst.

Bevorzugte Template für die Synthese von geordnet mesoporösen Feststoffen sind amphiphile Moleküle. Diese bilden vorteilhaft durch Selbstorganisation Mizellen aus und ordnen sich zu flüssigkristallinen Phasen. Diese Flüssigkristalle, mit einer Nanostrukturierung von typischerweise 2 nm bis 50 nm, dienen bevorzugt als Endotemplate bei der Synthese von mesoporösen Oxiden.

In einer weiteren bevorzugten Ausführungsform wird das Katalysatorvorstufen umfassenden Glas-Keramik-Substrats in einer inerten Atmosphäre thermisch behandelt. Die Block-Copolymer-Substrate zersetzen sich nämlich auch in inerten Atmosphären bei Temperaturen oberhalb von 350°C. Falls die Katalysatorsynthese in inerter Atmosphäre durchgeführt wird, wird anschließend bevorzugt eine weitere thermische Behandlung in Luftatmosphäre durchgeführt, um die Bindung zwischen Katalysatorschicht und Glas-Keramik-Substrat zu schwächen.

Für die Templatierung von geordnet mesoporösen Katalysatorschichten werden bevorzugt amphiphilen Blockcopolymere verwendet, die einen hydrophilen Polyethylenoxidblock (PEO) aufweisen

In einer weiteren bevorzugten Ausführungsform ist das Verfahren dadurch gekennzeichnet, dass das amphiphile Block-Copolymer ausgewählt ist aus der Gruppe umfassend AB-Block Copolymeren (Polyethylenoxid-block-polystyrene (PEO-PS), Polyethylenoxid-block-polymethylmethacrylat (PEO-PMMA), Poly-2-venlypyridin-block-polyallylmethacrylat (P2VP-PAMA), Polybutadien-bockpolyethyleneoxid (PB-PEO), Polyisopren-bock-polydimethylaminoethylmetacrlyt (PI-PDMAEMA), Polybutadien-bock-polydimethylaminoethylmetacrlyt (PB-PDMAEMA), Polyethylen-block-polyethylenoxid (PE-PEO), Polyisobutylen-block-po-lyethylenoxid (PIB-PEO) und Poly(ethylen-co-buty-len)-block-poly(ethylenoxid) (PEB-PEO), Polystyrol-block-poly(4-vinylpyridin) (PS-P4VP), Polyisopren-block-polyethyleneoxid (PI-PEO), Polydimethoxyanilin-block-polystyrol (PDMA-PS), Polyethylenoxid-blockpoly-n-utylacrylat (PEO-PBA), Polybutadien-bock- poly(2-vinylpyridin (PB-P2VP)), Polyethylenoxid-block-polylactid (PEO-PLA), Polyethylenoxid-block-polyglycolid (PEO-PLGA), Polyethylenoxid-block-polycaprolacton (PEO-PCL), Polyethylen-block-polyethylenglycol (PE-PEO), Polystyrol-block-polymethylmethacrlyt (PS-PMMA), Polystyrol-block-polyacrylsäure (PS-PAA), polypyrrol-block-polycaprolacton (PPy-PCL), Polysilicon-block-polyetylenoxid (PDMS-PEO), ABA-Block Copolymeren (Polyethylenoxid-block-polybutadien-block-polyethylenoxid (PEO-PB-PEO), Polyethylenoxid-block-polypropylenoxid-block-polyethylenoxid (PEO-PPO-PEO), Polypropylenoxid-block-polyethylenoxid-block-polypropylenoxid (PPO-PEO-PPO), Polyethylenoxid-block-polyisobutylen-block-polyethylenoxid (PEO-PIB-PEO), Polyethylenoxid-block-polybutadien-block-polyethylenoxid (PEO-PB-PEO),), Polylactid-block-polyethylenoxid-block-polylactidd (PLA-PEO-PLA), Polyglycolid-block-polyethylenoxid-block-polyglycolid (PGLA-PEO-PGLA), Polylactid-cocaprolacton-block-polyethylenoxid-block-polylactid-co-caprolacton (PLCL-PEO-PLCL), Polycaprolacton-blockpolytetrahydrofuran-blockpolycaprolacton (PCL-PTHF-PCL), Polypropylenoxid-block-Polyethylenoxid-block-polypropylenoxid (PPG-PEO-PPG), Polystyrol-block-polybutadien-block-polystyrol (PS-PB-PS), Polystyrol-blockpolyethylen-ran-butylen-block-polystyrol (PS-PEB-PS), Polystyrol-block-polyisopren-block-polystyrol (PS-PI-PS), ABC-Block Coplymeren (Polyisopren-block-polystyrol-block-polyethyleneoxid (PI-PS-PEO), Polystyrol-block-Polyvinylpyrrolidon-block-polyethyleneoxid (PS-PVP-PEO), Polystyrol-block-poly-2-venylpyridin-block-polyethylenoxid (PS-P2VP-PEO), Polystyrol-block-poly-2-venylpyridin-block-polyethylenoxid (PS-P2VP-PEO), Polystyrol-block-polyacrylsäure-polyethylenoxid (PS-PAA-PEO)), Polyethylenoxid-block-polylactid-block-decan (PEO-PLA-decan),
sowie anderen amphiphilen Polymeren (Polyethylenoxid-alkylether (PEO-Cxx), z.B. Brij35, Brij56, Brij58) oder Gemischen dieser, vorzugsweise PEO-PB, PEO-PPO, PEO-PB-PEO, PEO-PPO-PEO

In einer weiteren bevorzugten Ausführungsform ist das Verfahren dadurch gekennzeichnet, dass als Metall-Präkursor ein Metallsalz oder mehrere Metallsalze jeweils unterschiedlicher Metalle, oder deren Hydrate, eingesetzt werden.

In weiteren bevorzugten Ausführungsformen können auch Metallnanopartikel als Metall-Präkursor eingesetzt werden, die mit Hilfe von Polymertemplaten mesoporöstemplatiert als Schicht abgeschieden werden können. Metallnanopartikel sind vorteilhaft ggf. als Abfallprodukte aus der Industrie zu erhalten und demnach in einem Recycle-Prozess wieder zu verwerten.

In einer weiteren bevorzugten Ausführungsform ist das Verfahren dadurch gekennzeichnet, dass die Metallsalze ausgewählt sind aus der Gruppe umfassend Metallnitrat, Metallhalogenid, Metallsulfat, Metallacetat, Metallcitrat, Metallalkoxid oder deren Gemischen.

In alternativen Ausführungsformen sind auch weitere Salze einsetzbar sofern sie im geeigneten Lösungsmittel, ggf. unter Zugabe weiterer komplexierender Stoffe, löslich sind.

In einer weiteren bevorzugten Ausführungsform ist das Verfahren dadurch gekennzeichnet, dass die im Metall-Präkursor enthaltenen Metalle ausgewählt sind aus der Gruppe umfassend Alkalimetallen, vorzugsweise Lithium, Natrium, Kalium, Rubidium, Cäsium, Erdalkalimetallen, vorzugsweise Magnesium, Calcium, Strontium, Barium, Metallen der dritten Hauptgruppe des Periodensystems, vorzugsweise Bor, Aluminium, Indium, Gallium, Thallium, Metallen der vierten Hauptgruppe des Periodensystems, vorzugsweise Zinn, Silicium, Germanium, Blei, Metallen der fünften Hauptgruppe des Periodensystems, vorzugsweise Bismut, und Übergangsmetallen, vorzugsweise Iridium, Ruthenium, Cobalt, Zink, Kupfer, Mangan, Cadmium, Vanadium, Yttrium, Zirkonium, Scandium, Titan.

In einer bevorzugten Ausgestaltung ist das Verfahren dadurch gekennzeichnet, dass Ruthenium und/oder Iridium als Metall-Präkursor verwandet werden. Insbesondere diese beiden Metalle führen zu einer Katalysatorschicht, welche eine hohe Stabilität aufweist.

In einer weiteren bevorzugten Ausführungsform ist das Verfahren dadurch gekennzeichnet, dass als Lösungsmittel Wasser oder ein C1-C4-Alkohol, C2-C4-Ester, C2-C4-Ether, Formamid, Acetonitril, Aceton, Tetrahydrofuran, Benzyl, Toluol, Dimethylsulfoxid, Dichlormethan, Chloroform oder deren Mischungen eingesetzt werden, vorzugsweise Methanol, Ethanol, Formamid und/oder Tetrahydrofuran.

Die Vorteile und bevorzugten Ausführungsformen des erfindungsmäßen Verfahrens sind analog auf die erfindungsgemäße Polymermembran, sowie Brennstoffzelle oder Elektrolyseur zu übertragen und umgekehrt.

In einer weiteren bevorzugten Ausführungsform betrifft die Erfindung eine Polymermembran für eine für einen Elektrolyseur und/oder eine Brennstoffzelle, bevorzugt hergestellt durch ein Verfahren der eingangs genannten Art, umfassend eine nanostrukturierte mesoporöse Katalysatorschicht.

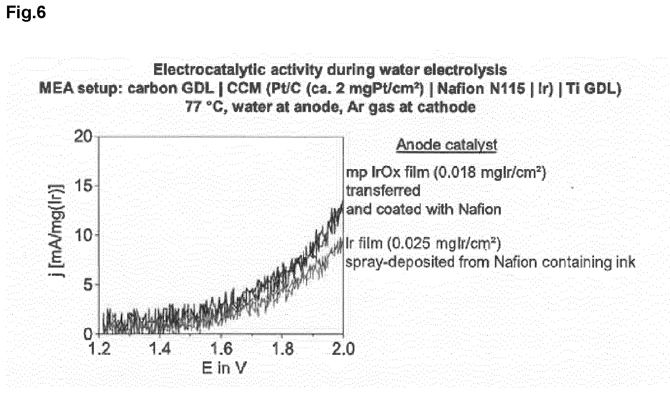

Eine Polymermembran umfassend eine nanostrukturierte mesoporöse Katalysatorschicht führt zu wesentlichen Vorteilen. So ist die höhere Massenaktivität der Spezies einer mesoporösen Katalysatorschicht nachgewiesen worden (vgl. auch Fig. 6).

In einer weiteren bevorzugten Ausführungsform betrifft die Erfindung eine Brennstoffzelle oder Elektrolyseur umfassend eine Polymermembran der eingangs genannten Art. Der Verwendung einer erfindungsgemäßen Polymermembran führt zu verbesserter Energiegewinnung (erzeugter Strom pro Milligramm Pt).

Die Anwendung in PEM Elektrolyseuren sowie Brennstoffzellen, zur Erzeugung respektive Rückverstromung von Wasserstoff, ist insbesondere bevorzugt.

Die erfindungsgemäße bevorzugte nanostrukturierte mesoporöse Polymermembran kann bevorzugt auch in anderen Bereichen eingesetzt werden. In der Medizintechnik werden bevorzugt mesoporöse Materialien als Wirkstoffträger verwendet. Makromoleküle werden im porösen System gespeichert und können über einen längeren Zeitraum verteilt als Wirkstoff an geeigneter Stelle abgegeben werden. Hier ist die gezielte Einstellbarkeit der Porosität und des Materials ein wichtiger Faktor.

Weiterhin sind Anwendungen nanostrukturierte mesoporöse Polymermembran in Bezug auf eine stoffliche Trennung - wie im Zusammenhang einer Fitration oder Osmose - denkbar.

### FIGUREN

Im Folgenden soll die Erfindung an Hand von Figuren näher erläutert werden, ohne auf diese beschränkt zu sein.

### Kurzbeschreibung der Abbildungen

- **Fig. 1**: Schematische Ablaufdarstellung des bevorzugten Verfahrens zur Herstellung einer katalysatorbeschichteten Polymermembran
- **Fig. 2**: Graphische Darstellung zusammen mit schematischen Skizzen vor (A) und nach (B) der Transferierung einer mesoporösen Katalysatorschicht auf eine kreisförmige Membran
- **Fig. 3**: REM-Darstellung in Gegenüberstellung einer schematischen Skizze von mesoporösen RuOₓ-Schichten, zum Zeitpunkt vor und nach einem Transfer von einem Glas-Keramik-Substrat auf die Polymermembran
- **Fig. 4**: REM-Darstellung von mesoporösen IrOₓ-Schichte, welche bei unterschiedlichen Temperaturen kalziniert wurden, zum Zeitpunkt vor und nach einem Transfer von einem Glas-Keramik-Substrat auf die Polymermembran
- **Fig. 5**: Vergleich einer transferierten mesoporösen IrOₓ-Schicht mit einer konventionellen IrOₓ-Schicht, der auf Nafion-Membranen mit ähnlichen geometrischen Ir-Belastungen hergestellt wurde
- **Fig. 6**: Darstellung in einem Diagramm der elektrokatalytische Aktivität einer über die das erfindungsgemäße bevorzugte Verfahren hergestellten katalysatorbeschichteten Membran mit templatiertem mesoporösen Iridiumoxid Katalysator im Vergleich zu einer über eine Sprühmethode hergestellte katalysatorbeschichteten Membran mit kommerziellem Ir-Katalysator

### Detaillierte Beschreibung der Abbildungen

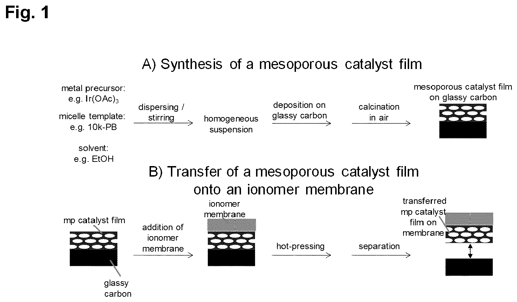

**Fig. 1** illustriert in einer schematische Ablaufdarstellung ein bevorzugtes Verfahren zur Herstellung einer katalysatorbeschichteten Polymermembran für einen Elektrolyseur und/oder eine Brennstoffzelle. Das Verfahren ist bevorzugt in zwei Abläufe zu unterteilen. Einerseits (Ablauf A) wird eine mesoporöse Katalysatorschicht auf ein Glas-Keramik-Substrat, besonders bevorzugt ein Glaskohlenstoff, synthetisiert, andererseits (Ablauf B) wird die mesoporöse Katalysatorschicht auf die Polymermembran übertragen.

In einem ersten Schritt des Ablaufs A wird eine homogene Suspension hergestellt, wobei die Suspension bevorzugt einen Metall-Präkursor (z.B. Ir(OAc)₃, ein Lösungsmittel (z.B. EtOH) und ein Mizellen bildendes Templat (z.B. 10k-Pb; PEO-PB-PEO) umfasst. In einem nächsten Schritt wird die Suspension auf ein Glas-Keramik-Substrat, besonders bevorzugt ein Glaskohlenstoff, aufgetragen und in Luft kalziniert, sodass eine mesoporöse Katalysatorschicht entsteht.

Im Ablauf B wird eine Polymembran auf das Glas-Keramik-Substrat mit der darauf enthaltenden mesoporösen Katalysatorschicht unter einer erhöhten Temperatur (HotPressing Verfahren) gepresst. Abschließend wird die Polymermembran vom Glas-Keramik-Substrat getrennt, wobei die Katalysatorschicht auf der Polymermembran haftet.

Die in **Fig. 2** abgebildete Darstellungsfolge zeigt einen bevorzugten Ablauf des Verfahrens zur Herstellung einer katalysatorbeschichteten Polymermembran. Insbesondere wird eine graphische Darstellung zusammen mit schematischen Skizzen vor (A) und nach (B) der Transferierung einer mesoporösen Katalysatorschicht auf eine kreisförmige Membran illustriert. Ein Glaskohlenstoff wird mit einer mesoporösen RuOₓ-Katalysatorschicht bereitgestellt. Anschließend wird eine Nafion-Membran auf den Glaskohlenstoff umfassend der Katalysatorschicht gepresst, wobei nach dem Separieren des Pressverbundes die Katalysatorschicht auf der Membran haftet.

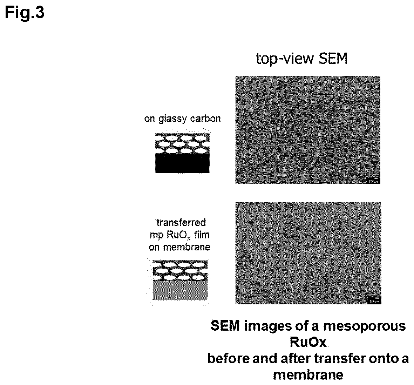

**Fig. 3** zeigt eine REM-Darstellung (Rasterelektronenmikroskop) in einer Gegenüberstellung mit einer schematischen Skizze von mesoporösen RuOₓ-Schichten, zum Zeitpunkt vor und nach einem Transfer von einem Glas-Keramik-Substrat auf die Polymermembran. **Fig. 3** zeigt dabei den Beibehalt der Mesoporenmorphologie während des bevorzugten Verfahrensablaufs auf, insbesondere nach dem Transfer der Katalysatorschicht auf die Polymermembran.

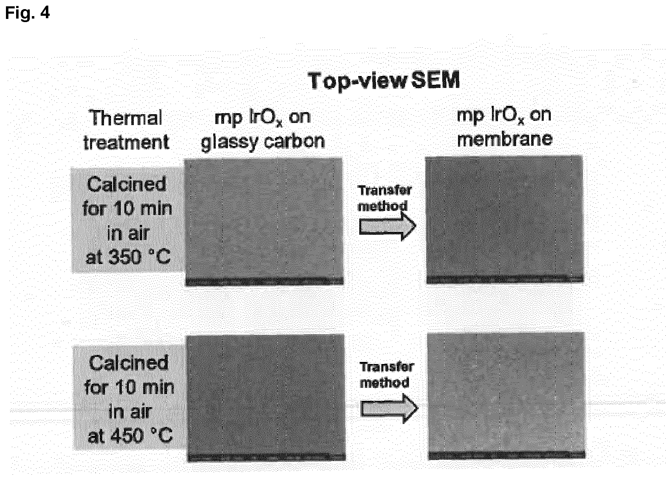

**Fig. 4** zeigt eine REM-Darstellung von mesoporösen IrOx-Schichten, welche bei unterschiedlichen Temperaturen kalziniert wurden, zum Zeitpunkt vor und nach einem Transfer von einem Glas-Keramik-Substrat auf die Polymermembran. Auch bei unterschiedlichen Temperaturen wird die Mesoporenmorphologie der Katalysatorschicht beibehalten.

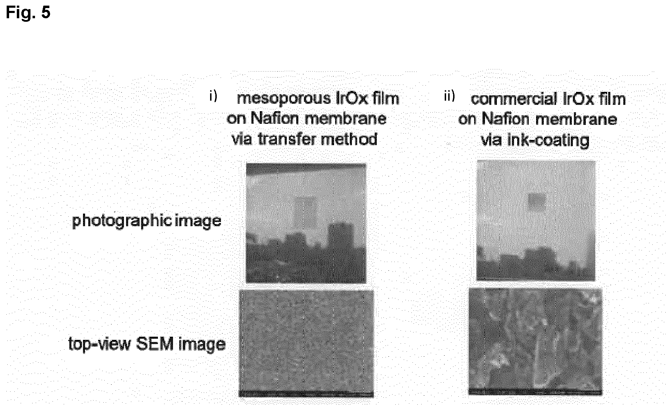

**Fig. 5** zeigt photographische sowie REM-Aufnahmen von Katalysatorschichten auf Membranen. Eine katalysatorbeschichtete Membran hergestellt durch ein erfindungsgemäßes bevorzugtes Verfahren wird dabei mit einer katalysatorbeschichteten Membran aus dem Stand der Technik verglichen. Die über das erfindungsgemäße bevorzugte Verfahren hergestellte katalysatorbeschichtete Membran (i) mit einer mesoporösen Oxidschicht zeigt geordnete Mesoporen und eine nanokristalline Struktur auf. Die auf der aus einem Ink über eine Sprühmethode hergestellte katalysatorbeschichtete Membran (ii) zeigt hingegen keine definierte Nanostruktur auf.

Das in **Fig. 6** dargestellte Diagramm zeigt die elektrokatalytische Aktivität einer über die Transfermethode hergestellten katalysatorbeschichteten Membran mit templatiertem mesoporösen Iridiumoxid Katalysator im Vergleich zu einer über eine Sprühmethode hergestellte katalysatorbeschichteten Membran mit kommerziellem Ir-Katalysator. Die über die Transfermethode mit einer mesoporösen Katalysatorschicht versehene Membran erreicht bei vergleichbarer geometrischen Ir-Beladung, eine um etwa 35% höhere Ir-Massenaktivität als das Referenzsystem Als Kathodenbeschichtung dient in beiden katalysatorbeschichteten Membranen der gleiche Pt/C Katalysator, der über eine Sprühverfahren aufgebracht wurde. Die Systeme unterscheiden sich in den Anodenbeschichtungen.

## Patentansprüche

1. Verfahren zur Herstellung einer katalysatorbeschichteten Polymermembran für einen Elektrolyseur und/oder eine Brennstoffzelle
umfassend die nachfolgenden Schritte:
a) Bereitstellung eines Glas-Keramik-Substrats;
b) Synthese einer mesoporösen Katalysatorschicht auf das Glas-Keramik-Substrat;
c) Pressen einer Polymermembran auf das mit der Katalysatorschicht beschichtete Glas-Keramik-Substrat unter einer ersten Temperatur T₁, wodurch ein Sandwichgebilde erzeugt wird;
d) Separieren des Sandwichgebildes, wobei die Katalysatorschicht vom Glas-Keramik-Substrat getrennt wird und an der Polymermembran haftet.

2. Verfahren nach Anspruch 1
**dadurch gekennzeichnet, dass**
das Glas-Keramik-Substrat ein Glaskohlenstoff ist.

3. Verfahren nach einem oder beiden der vorhergehenden Ansprüche
**dadurch gekennzeichnet, dass**
dem Verfahrensschritt c) und dem Verfahrensschritt d) der nachfolgende Verfahrensschritt zwischensteht:
c1)Abkühlen des Sandwichgebildes, auf eine zweite Temperatur T₂.

4. Verfahren nach einem oder mehreren der vorhergehenden Ansprüche
**dadurch gekennzeichnet, dass**
der Verfahrensschritt b) die nachfolgenden Schritte umfasst:
(i) Herstellung einer Suspension umfassend, ein Templat, einen Metall-Präkursor und ein Lösungsmittel;
(ii) Auftragen der Suspension auf das Glas-Keramik-Substrat, sodass sich ein Suspensionsfilm auf dem Glas-Keramik-Substrat bildet;
(iii) Trocknen des Suspensionsfilms auf dem Glas-Keramik-Substrat bei einer Temperatur T₄, sodass das Lösungsmittel innerhalb des Suspensionsfilms verdampft und eine Schicht einer Katalysatorvorstufe mit integrierten Templatstrukturen erhalten wird;
(iv) thermische Behandlung des Katalysatorvorstufen umfassenden Glas-Keramik-Substrats bei einer dritten Temperatur T₃, und einer Kalzinierzeit t₃, sodass eine mesoporöse Katalysatorschicht entsteht.

5. Verfahren nach einem oder mehreren der vorhergehenden Ansprüche
**dadurch gekennzeichnet, dass**
die Temperatur T₁ in einem Bereich liegt zwischen 80°C und 800°C, bevorzugt in einem Bereich zwischen 200°C und 600°C und insbesondere bei 400°C.

6. Verfahren nach einem oder mehreren der vorhergehenden Ansprüche
**dadurch gekennzeichnet, dass**
die Polymermembran auf das mit der Katalysatorschicht beschichtete Glas-Keramik-Substrat mit einem Anpressdruck p₁ in einem Bereich von100 N/cm² bis 10000 N/cm², bevorzugt 1000 N/cm² bis 3000 N/cm² und einer Zeit t₁ in einem Bereich von 5 s bis 300 min, bevorzugt 5 min bis 60 min gepresst wird.

7. Verfahren nach Anspruch 3
**dadurch gekennzeichnet, dass**
die Temperatur T₂ einer Temperatur unterhalb des Glaspunktes der Polymermembran entspricht und die Temperatur T₄ in einem Bereich zwischen 18°C -80°C liegt und/oder die Temperatur T₃ in einem Bereich liegt zwischen 200°C und 700°C, bevorzugt zwischen 300°C und 600°C, und die Kalzinierzeit t₃ in einem Bereich liegt zwischen 1 Minute und 1440 Minuten, insbesondere bei 10 Minuten.

8. Verfahren nach Anspruch 4
**dadurch gekennzeichnet, dass**
die Suspension ein oder mehrere amphiphile Block-Copolymere umfasst.

9. Verfahren nach Anspruch 8
**dadurch gekennzeichnet, dass**
das amphiphile Block-Copolymer ausgewählt ist aus der Gruppe umfassend:
AB-Block Copolymeren (Polyethylenoxid-block-polystyrene (PEO-PS), Polyethylenoxid-block-polymethylmethacrylat (PEO-PMMA), Poly-2-venlypyridin-block-polyallylmethacrylat (P2VP-PAMA), Polybutadien-bockpolyethyleneoxid (PB-PEO), Polyisopren-bock-polydimethylaminoethylmetacrlyt (PI-PDMAEMA), Polybutadien-bock-polydimethylaminoethylmetacrlyt (PB-PDMAEMA), Polyethylen-block-polyethylenoxid (PE-PEO), Polyisobutylen-block-po-lyethylenoxid (PIB-PEO) und Poly(ethylen-co-buty-len)-block-poly(ethylenoxid) (PEB-PEO), Polystyrol-block-poly(4-vinylpyridin) (PS-P4VP), Polyisopren-block-polyethyleneoxid (PI-PEO), Polydimethoxyanilin-block-polystyrol (PDMA-PS), Polyethylenoxid-block-poly-n-utylacrylat (PEO-PBA), Polybutadien-bock- poly(2-vinylpyridin (PB-P2VP)), Polyethylenoxid-block-polylactid (PEO-PLA), Polyethylenoxid-block-polyglycolid (PEO-PLGA), Polyethylenoxid-block-polycaprolacton (PEO-PCL), Polyethylen-block-polyethylenglycol (PE-PEO), Polystyrol-block-polymethylmethacrlyt (PS-PMMA), Polystyrol-block-polyacrylsäure (PS-PAA), polypyrrol-block-polycaprolacton (PPy-PCL), Polysilicon-block-polyetylenoxid (PDMS-PEO),
ABA-Block Copolymeren (Polyethylenoxid-block-polybutadien-block-polyethylenoxid (PEO-PB-PEO), Polyethylenoxid-block-polypropylenoxid-block-polyethylenoxid (PEO-PPO-PEO), Polypropylenoxid-block-polyethylenoxid-block-polypropylenoxid (PPO-PEO-PPO), Polyethylenoxid-block-polyisobutylen-block-polyethylenoxid (PEO-PIB-PEO), Polyethylenoxid-block-polybutadien-block-polyethylenoxid (PEO-PB-PEO)), Polylactid-block-polyethylenoxid-block-polylactidd (PLA-PEO-PLA),
Polyglycolid-block-polyethylenoxid-block-polyglycolid (PGLA-PEO-PGLA), Polylactid-co-caprolacton-block-polyethylenoxid-block-polylactid-cocaprolacton (PLCL-PEO-PLCL), Polycaprolacton-blockpolytetrahydrofuran-blockpolycaprolacton (PCL-PTHF-PCL), Polypropylenoxid-block-Polyethylenoxid-block-polypropylenoxid (PPG-PEO-PPG), Polystyrol-block-polybutadien-block-polystyrol (PS-PB-PS), Polystyrol-block-polyethylen-ranbutylen-block-polystyrol (PS-PEB-PS), Polystyrol-block-polyisopren-block-polystyrol (PS-PI-PS),
ABC-Block Coplymeren (Polyisopren-block-polystyrol-block-polyethyleneoxid (PI-PS-PEO), Polystyrol-block-Polyvinylpyrrolidon-block- polyethyleneoxid (PS-PVP-PEO), Polystyrol-block-poly-2-venylpyridin-block-polyethylenoxid (PS-P2VP-PEO), Polystyrol-block-poly-2-venylpyridin-block-polyethylenoxid (PS-P2VP-PEO), Polystyrol-block-polyacrylsäure-polyethylenoxid (PS-PAA-PEO)), Polyethylenoxid-block-polylactid-block-decan (PEO-PLA-decan),
sowie anderen amphiphilen Polymeren (Polyethylenoxid-alkylether (PEO-Cₓₓ), z.B. Brij35, Brij56, Brij58)
oder Gemischen dieser,
vorzugsweise PEO-PB, PEO-PPO, PEO-PB-PEO, PEO-PPO-PEO.

10. Verfahren nach Anspruch 4
**dadurch gekennzeichnet, dass**
als Metall-Präkursor ein Metallsalz oder mehrere Metallsalze jeweils unterschiedlicher Metalle, oder deren Hydrate, eingesetzt werden.

11. Verfahren nach Anspruch 10
**dadurch gekennzeichnet, dass**
die Metallsalze ausgewählt sind aus der Gruppe umfassend Metallnitrat, Metallhalogenid, Metallsulfat, Metallacetat, Metallcitrat, Metallalkoxid oder deren Gemischen.

12. Verfahren nach einem oder beiden der vorhergehenden Ansprüche 10 und/oder 11
**dadurch gekennzeichnet, dass**
die im Metall-Präkursor enthaltenen Metalle ausgewählt sind aus der Gruppe umfassend Alkalimetallen, vorzugsweise Lithium, Natrium, Kalium, Rubidium, Cäsium, Erdalkalimetallen, vorzugsweise Magnesium, Calcium, Strontium, Barium, Metallen der dritten Hauptgruppe des Periodensystems, vorzugsweise Bor, Aluminium, Indium, Gallium, Thallium, Metallen der vierten Hauptgruppe des Periodensystems, vorzugsweise Zinn, Silicium, Germanium, Blei, Metallen der fünften Hauptgruppe des Periodensystems, vorzugsweise Bismut, und Übergangsmetallen, vorzugsweise Iridium, Ruthenium, Cobalt, Zink, Kupfer, Mangan, Cadmium, Vanadium, Yttrium, Zirkonium, Scandium, Titan.

13. Verfahren nach Anspruch 4
**dadurch gekennzeichnet, dass**
als Lösungsmittel Wasser oder ein C1-C4-Alkohol, C2-C4-Ester, C2-C4-Ether, Formamid, Acetonitril, Aceton, Tetrahydrofuran, Benzyl, Toluol, Dimethylsulfoxid, Dichlormethan, Chloroform oder deren Mischungen eingesetzt werden, vorzugsweise Methanol, Ethanol, Formamid und/oder Tetrahydrofuran.

14. Polymermembran für eine für einen Elektrolyseur und/oder eine Brennstoffzelle, bevorzugt hergestellt durch ein Verfahren nach einem oder mehreren der vorhergehenden Ansprüche, umfassend eine nanostrukturierte mesoporöse Katalysatorschicht.

15. Brennstoffzelle oder Elektrolyseur umfassend eine Polymermembran nach Anspruch 14.
